# EUROPEAN PATENT APPLICATION

(11) **EP 4 366 144 A1**
(43) Date of publication of application: **08.05.2024**
(21) Application number: 21947880.7
(22) Date of filing: 13.09.2021
(51) Int. Cl.: H02K 15/03, H02K 1/27

(54) **ROTOR, FABRICATION DEVICE THEREOF AND FABRICATION METHOD THEREFOR**

(30) Priority: 01.07.2021 CN 202110745764
(71) Applicant: Zhejiang Pangood Power Technology Co., Ltd., Jinhua, Zhejiang 321109 (CN)
(72) Inventor: YAN, Jianxin, Jinhua, Zhejiang 321109 (CN)
(74) Representative: advotec.
(86) International application number: PCT/CN2021/117972
(87) International publication number: WO 2023/272947

(57) **Abstract**

The present invention provides a rotor, a fabrication device thereof and a fabrication method therefor. The fabrication device is used for coating diaphragms on the surface of rotor bodies. The fabrication device comprises an upper mold, a lower mold, an opening and closing apparatus and a temperature control apparatus. The opening and closing apparatus controls the opening and closing of the upper mold and the lower mold, and the temperature control apparatus provides the temperature for the hot-melt fixation of the diaphragms. When at least one of the diaphragms and one of the rotor bodies are placed between the upper mold and the lower mold, and when the upper mold and the lower mold are closed, the diaphragm is held on magnetic steel and a limiting ring of the rotor body so as to form a rotor. By using the opening and closing of the upper mold and the lower mold and the viscosity of the diaphragm, the diaphragm may be fixed at a designated position of a rotor body, so that the rotor not only has a simple structure, but is also conveniently fabricated and molded.

## Description

### FIELD

The present application relates to the technical field of rotors, and in particular to a rotor and a manufacturing apparatus therefor and a manufacturing method therefor.

### BACKGROUND

Radial magnetic field motors and axial field magnetic motors (also known as disc motors) are two major branches in the field of motors. The disc motor is more and more widely used due to its characteristics such as small axial size and high efficiency.

In the conventional technology, a rotor of a disc motor mainly includes a rotor disc and magnetic steels. The rotor disc has a clamping groove for fixing the magnetic steels, and the magnetic steels are fixed in the clamping groove by using glue or a limiting ring. During the long-term and high-speed rotation process of the rotor, the centrifugal force of the rotor generates a great stress on the limiting ring, which affects the fixing effect of the limiting ring on the magnetic steels, and thereby reduces the use efficiency of the rotor.

### SUMMARY

In order to solve the above problems, the present application provides a rotor, a manufacturing apparatus therefor, and a manufacturing method therefor for improving the fixation of magnetic steels in the radial direction, the axial direction, and the circumferential direction, and preventing the magnetic steels from shaking or even being detached.

According to one aspect of the present application, a manufacturing apparatus is provided according to the present application for coating a film on a surface of a rotor body. The manufacturing apparatus includes an upper mold, a lower mold, an opening and closing device, and a temperature control device; the opening and closing device is configured to control opening and closing of the upper mold and the lower mold, and the temperature control device is configured to provide a temperature for hot melting fixation of the film; when at least one film and the rotor body are placed between the upper mold and the lower mold, and the upper mold and the lower mold are closed, the at least one film is kept on magnetic steels and a limiting ring of the rotor body to form a rotor.

In a preferred solution, the number of the films is at least two, and the at least two films are kept on both sides of the rotor body in an axial direction.

In a preferred solution, the film is kept on the magnetic steels, the limiting ring, and the rotor disc of the rotor body.

In a preferred solution, the manufacturing apparatus further includes a guide device, the guide device is arranged between the upper mold and the lower mold to automatically align the upper mold and the lower mold during an opening and closing process.

In a preferred solution, the guide device includes at least one guide rod, the at least one guide rod is mounted at the lower mold, and the upper mold is provided with a guide hole for the guide rod to be inserted in.

In a preferred solution, the manufacturing apparatus further includes a turning device, the turning device is arranged on one side of the lower mold to clamp the rotor body and turn over the rotor body by 180 degrees.

According to another aspect of the present application, a manufacturing method is also provided according to the present application. The manufacturing method includes the steps of:
(a) transferring at least one film and a rotor body for forming a rotor, to make the at least one film and the rotor body be located between an upper mold and a lower mold of a manufacturing apparatus; and
(b) closing the upper mold and the lower mold by an opening and closing device to keep the at least one film on magnetic steels and a limiting ring of the rotor body.

In a preferred solution, step (a) comprises the step of heating the at least one film, and the upper mold or the lower mold by a temperature control device.

In a preferred solution, step (a) further comprises the following step: the number of the films is two, and the two films are placed on both sides of the rotor body in the axial direction respectively.

In a preferred solution, step (b) further includes the step of keeping the film on the magnetic steels, the limiting ring, and a rotor disc of the rotor body.

In a preferred solution, step (b) further comprises the steps of separating the upper mold and the lower mold by the opening and closing device after the at least one film is coated on one side of the rotor body; and clamping the rotor body by a turning device and turning over the rotor body by 180 degrees to coat another film on the other side of the rotor body.

According to yet another aspect of the present application, a rotor is provided according to the present application. The rotor includes:
a rotor body, where the rotor body includes a rotor disc, multiple magnetic steels, and a limiting ring, the rotor disc includes a base plate and multiple support plates, the multiple support plates are extended outward from a periphery of the base plate, the multiple magnetic steels are fixed to and extended outward from the base plate, the multiple magnetic steels and the multiple support plates are arranged in an alternating arrangement, and the limiting ring is sleeved on an outer periphery of the multiple magnetic steels to fix the multiple magnetic steels between the base plate and the limiting ring; and
at least one film, where the at least one film is kept on the multiple magnetic steels and the limiting ring.

In a preferred solution, the film is fixed to the multiple magnetic steels and the limiting ring by hot melting.

In a preferred solution, the film is kept on the multiple magnetic steels, the limiting ring, and the rotor disc of the rotor body.

In a preferred solution, the film has an inner edge and an outer edge opposite to the inner edge, the inner edge of the film is arranged on the base plate, and the outer edge of the film is arranged on the limiting ring, to coat the multiple magnetic steels with the film.

In a preferred solution, the multiple magnetic steel is partially exposed out of the film.

In a preferred solution, the film has an inner edge and an outer edge opposite to the inner edge, the inner edge of the film is arranged on the multiple support plates and the multiple magnetic steels, and the outer edge of the film is arranged on the limiting ring.

In a preferred solution, the outer edge of the film is located between inner and outer end faces of the limiting ring.

In a preferred solution, the film matches a shape of an outer contour of the multiple magnetic steels, and connection positions between the multiple magnetic steels and the base plate, the multiple support plates, and the limiting ring are all coated by the film.

In a preferred solution, the number of the films is at least two, and the at least two films are kept on both sides of the rotor body in the axial direction.

In a preferred solution, one side of the magnetic steel is coated by the film, and the other side of the magnetic steel is partially exposed out of the film.

In a preferred solution, each side of the rotor body in the axial direction is provided with two films.

In a preferred solution, a surface of the film and/or a surface of the rotor disc have joint portions.

In a preferred solution, the joint portion on the film is in a shape of grids, and the joint portion on the rotor disc is in a shape of straight lines.

In a preferred solution, the rotor disc includes multiple layers of substrates, and the multiple layers of substrates are laminated and hot-pressed to form the rotor disc.

Compared with the conventional technology, the technical solutions of the present application have advantages as follows.

By coating at least one side of the rotor body in the axial direction with the film and keeping the film on the magnetic steels and the limiting ring, the connection between the magnetic steels and the limiting ring is more stable to block the axial movement of the magnetic steels, improve the flatness of the surface of the rotor body, prevent the limiting ring from failing due to the high-speed rotation of the rotor, further avoid the shaking or even detachment of the magnetic steels, which effectively prolongs the service life and work efficiency of the rotor. The shape of the film is various and may be connected to the magnetic steels, the limiting ring, and the rotor disc to allow the magnetic steels to be partially exposed or unexposed. In the case that the magnetic steels are partially exposed, heat is dissipated through the exposed parts of the magnetic steels. The outer edge of the film is located between the inner and outer end faces of the limiting ring, to prevent the outer edge of the film from exceeding the limiting ring and the adhesion of the film on the rotor body from being affected. In addition, the rotor disc is formed by laminating multiple layers of substrates, and the surface of the film and/or the surface of the rotor disc have the joint portions, which improves the combination effect of the film and the rotor disc.

The film can be fixed at the designated position of the rotor body only by opening and closing he upper mold and the lower mold and the adhesiveness of the film, that is, the film is kept on the magnetic steels, the limiting ring, and the rotor disc of the rotor body. The structure is simple, and manufacturing and molding are convenient. In addition, the automation level can be further improved by the loading and unloading devices, the turning device and so on, thereby further improving the manufacturing efficiency.

The present application is further described below in conjunction with the drawings and the embodiments.

### BRIEF DESCRIPTION OF THE DRAWINGS

Figure 1 is a schematic view showing the structure of a rotor according to a first embodiment of the present application;
Figure 2 is a schematic view showing the structure of a rotor according to a second embodiment of the present application;
Figure 3 is a schematic view showing the structure of a rotor according to a third embodiment of the present application;
Figure 4 is a schematic view showing the structure of a rotor according to a fourth embodiment of the present application;
Figure 5 is a left view of a rotor according to the present application;
Figure 6 is a schematic view showing the structure of a rotor body according to the present application;
Figure 7 is a partial cross-sectional view of a rotor body according to the present application;
Figure 8 is a schematic view showing an upper mold and a lower mold of a manufacturing apparatus according to the present application being in a separated state;
Figure 9 is a schematic view showing the upper mold and the lower mold of the manufacturing apparatus according to the present application being in a closed state; and
Figure 10 is a schematic flow chart of a manufacturing method of the present application.

### DETAILED DESCRIPTION OF THE EMBODIMENTS

The following description is provided to disclose the present application to enable those skilled in the art to implement the present application. The preferred embodiments in the following description are only examples, and those skilled in the art can think of other obvious modifications. The basic principles of the present application defined in the following description may be applied to other embodiments, variations, improvements, equivalents, and other technical solutions without departing from the scope of the present application.

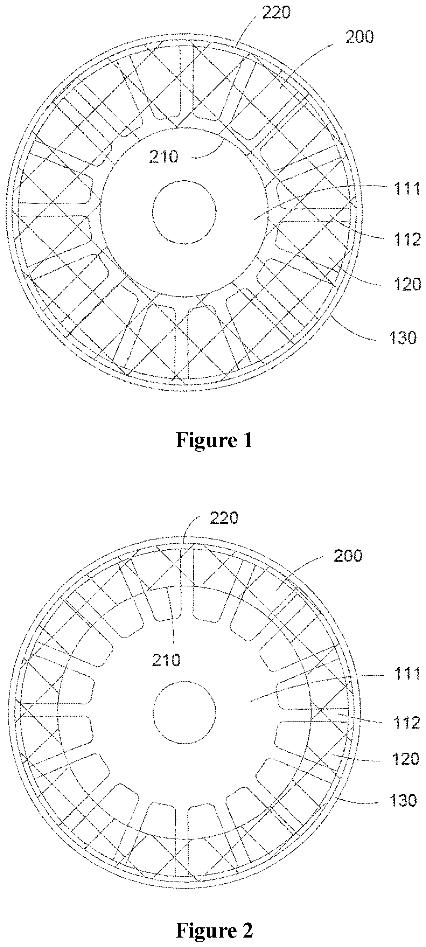

As shown in Figures 1 to 7, a rotor includes:
a rotor body 100, where the rotor body includes a rotor disc 110, multiple magnetic steels 120, and a limiting ring 130, the rotor disc 110 includes a base plate 111 and multiple support plates 112, the multiple support plates 112 are extended outward from a periphery of the base plate 111, the multiple magnetic steels 120 are fixed to and extended outward from the base plate 111, the multiple magnetic steels 120 and the multiple support plates 112 are arranged in an alternating arrangement, and the limiting ring 130 is sleeved on an outer periphery of the multiple magnetic steels 120 to fix the multiple magnetic steels 120 between the base plate 111 and the limiting ring 130; and
at least one film 200, where the at least one film 200 is kept on the multiple magnetic steels 120 and the limiting ring 130.

Each of the multiple magnetic steels 120 is inserted between two adjacent support plates 112 and fixed between the base plate 111 and the limiting ring 130, so that the magnetic steel 120 is limited and fixed by the base plate 111 and the limiting ring 130 in a radial direction, and the magnetic steel 120 are limited and fixed by the support plates 112 in a circumferential direction and an axial direction. In addition, according to the present application, at least one side of the rotor body 100 in the axial direction is coated with the film and the film 200 is kept on the magnetic steels 120 and the limiting ring 130, so that the connection between the magnetic steels 120 and the limiting ring 130 is more stable to block the axial movement of the magnetic steels 120 and improve the flatness of the surface of the rotor body 100, which prevents the limiting ring 130 from failing due to high-speed rotation of the rotor body 100, thereby further avoiding the detachment of the magnetic steels 120 and effectively prolonging the service life and the work efficiency of the rotor body 100.

As shown in Figure 1, the base plate 111 is circular, and the support plate 112 is elongated. The support plates 112 are provided at equal intervals along a periphery of the base plate 111, to define a space for accommodating the magnetic steel 120 between the two adjacent support plates 112. The space matches the shape of the magnetic steel 120, both the space and the magnetic steel is fan-shaped, so that the magnetic steel 120 is tightly fitted between the two adjacent support plates 112, to fix the magnetic steel 120 in the circumferential and axial directions by the rotor disc 110.

Specifically, the support plates 112 are integrally connected to the base plate 111, the support plates 112 and the base plate 111 have the same size in the axial direction of the base plate 111 and the size is relatively small, so as to be applicable to a disc motor with a small axial size.

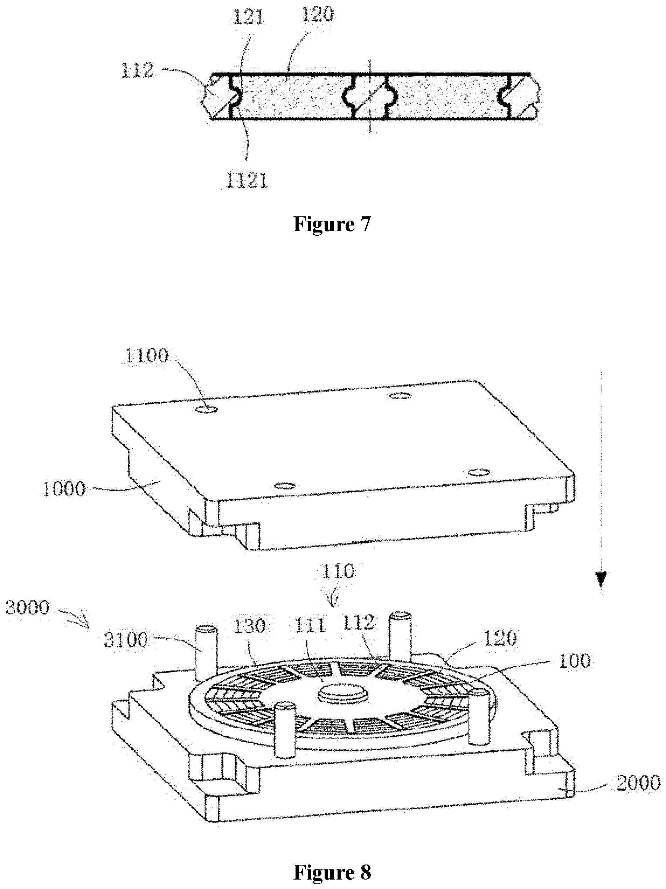

As shown in Figure 7, the magnetic steel 120 has two clamping grooves 121. The two clamping grooves 121 are kept on both sides of the magnetic steel 120 in the circumferential direction. The support plate 112 has two clamping bars 1121, the two clamping bars 1121 are kept on both sides of the base plate 111 in the circumferential direction to allow the clamping bars 1121 to be limited in the clamp grooves 121 when the magnetic steel 120 is inserted between the two adjacent support plates 112, so as to fix the axial direction of the magnetic steel 120.

Specifically, the clamping groove 121 may extend along the radial direction of the magnetic steel 120 to inner and outer edges of the magnetic steel 120. The clamping bar 1121 extends along a length direction of the support plate 112 to inner and outer end faces of the support plate 112. The inner end face of the support plate 112 is integrally connected with the base plate 111, and the outer end face of the support plate 112 faces outwards. In this way, a user can first insert the clamping bars 1121 into the corresponding clamping grooves 121 and make the magnetic steel 120 be inserted along the length direction of the support plate 112 between the two adjacent support plates 112. It should be noted that the length direction of the support plate 112 and the radial direction of the magnetic steel 120 are consistent with the radial direction of the base plate 111.

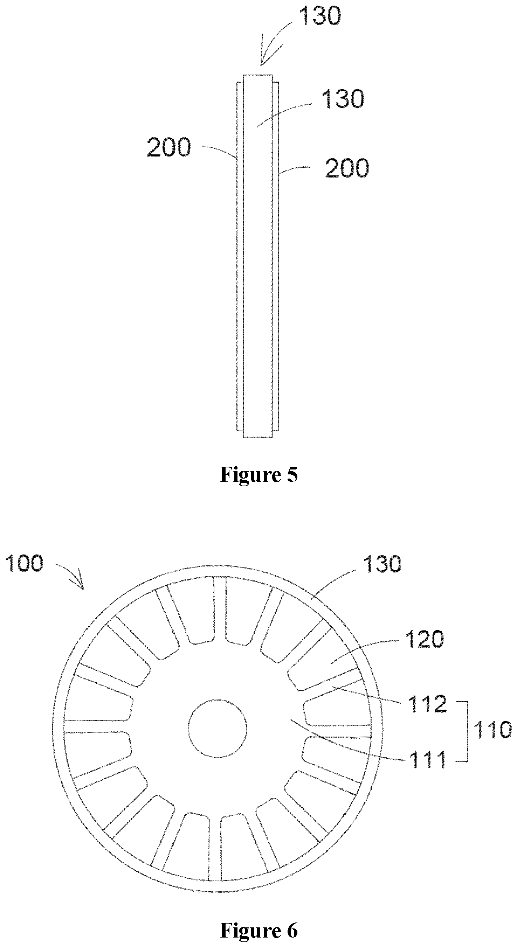

As shown in Figure 6, the limiting ring 130 is annular and is sleeved on the outer periphery of the magnetic steels 120 to fix the magnetic steels 120 between the base plate 111 and the limiting ring 130, so as to fix the magnetic steel 120 in the radial direction. A length of the support plate 112 may be with the same as a radial length of the magnetic steel 120, so that the limiting ring 130 can be simultaneously sleeved on the outer periphery of the magnetic steels 120 and the outer end face of the support plate 112, which prevents the fixation effect from being affected by a gap between the support plate 112 and the limiting ring 130.

The rotor disc 110, the magnetic steels 120, and the limiting ring 130 have the same size in the axial direction of the rotor disc 110 and the size is relatively small, so as to be applicable to the disc motor with a small axial size.

The rotor disc 110, the magnetic steels 120, and the limiting ring 130 may be further connected by using glue, a fastener, or a limiting structure. Taking the fastener as an example, the fastener passes through the limiting ring 130 and is locked with the support plate 112 to make the limiting ring 130 be connected to the support plate 112. Taking the limit structure as an example, the limiting ring 130 and the support plate 112 have mutual limiting structures to connect the limiting ring 130 to the support plate 112. Taking glue as an example, the rotor disc 110, the magnetic steels 120, and the limiting ring 130 are assembled first, and then glue is injected to joint seams, or glue may be coated on the parts first before assembling.

The film 200 may be fixed to the magnetic steels and the limiting ring by hot melting, that is, the film 200 itself has adhesiveness and releases the adhesiveness after being heated, and the film 200 is cooled and solidified on the magnetic steels and the limiting ring through the adhesiveness. The film 200 may be a polypropylene film (also known as a PP film) or the like. Alternatively, the film 200 may be fixed by using glue.

The film 200 is kept on the magnetic steels 120 and the limiting ring 130, to connect the magnetic steels 120 and the limiting ring 130, so as to fix the magnetic steels 120 in the axial direction and improve the flatness of the surface of the rotor body 100 as well. Of course, the film may also be kept on the magnetic steels 120, the limiting ring 130, and the rotor disc 110 of the rotor body 100 to further improve the connection effect of the magnetic steels 120 and thereby preventing the magnetic steels 120 from shaking on the rotor disc 110 or even being detached.

The shape of the film 200 may be various, as long as the film 200 can fully or partially coat connection portions between the magnetic steels 120 and the rotor disc 110, and between the magnetic steels 120 and the limiting ring 130, respectively. The solutions are illustrated hereinafter through four embodiments.

### First Embodiment

As shown in Figure 1, a film 200 has an inner edge 210 and an outer edge 220 opposite to the inner edge 210, the inner edge 210 of the film 200 is arranged on the base plate 111, and the outer edge 220 of the film 200 is arranged on the limiting ring 130, to coat the magnetic steels 120 by the film 200.

The film 200 is annular-shaped, the inner edge 210 and outer edge 220 of the film 200 are located on both sides of the magnetic steel 120 in the radial direction, respectively. The inner edge 210 of the film 200 is located on the base plate 111, and the outer edge 220 of the film 200 is located on the limiting ring 130. It can be seen that the film 200 is correspondingly connected to the magnetic steels 120, the base plate 111, and the limiting ring 130, which improves the connection effect of the film 200 to the magnetic steels 120.

It can be seen from the above that, a radial size of the film 200 is greater than a radial size of the magnetic steel 120. The film 200 not only coats the entire magnetic steels 120, but also coats the entire support plates 112.

Preferably, the outer edge 220 of the film 200 is located between inner and outer end faces of the limiting ring 130, so as to prevent the outer edge 220 of the film 200 from exceeding the limiting ring 130 and in turn affecting the adhesion of the film 200 on the rotor body 100. For example, the outer edge 220 of the film 200 may become warped over time, resulting in the detachment of the film 200. The inner end face of the limiting ring 130 abuts against the outer periphery of the magnetic steels 120, and the outer end face of the limiting ring 130 faces outwards.

For further illustration, a diameter of the outer end face of the limiting ring 130 is greater than a diameter of the outer edge 220 of the film 200, so that the outer edge 220 of the film 200 is located between the inner and outer end faces of the limiting ring 130.

A distance between the inner edge 210 of the limiting ring 130 and an inner periphery of the magnetic steels 120 is less than or equal to 2 times a distance between the outer edge 220 of the limiting ring 130 and the outer periphery of the magnetic steels 120, preferably 1.5 times.

In addition, a distance between the inner and outer end faces of the limiting ring 130 (i.e. a radial size of the limiting ring 130) is less than or equal to 2 times a distance between the outer edge 220 of the limiting ring 130 and the outer periphery of the magnetic steels 120, preferably 1.5 times.

### Second Embodiment

As shown in Figure 2, the present embodiment differs from the first embodiment in that the inner edge 210 of the film 200 is arranged on the support plate 112 and the magnetic steels 120.

The outer edge 220 of the film 200 is located between the inner and outer end faces of the limiting ring 130, and a ratio of the radial size of the film 200 to the radial size of the magnetic steel 120 is less than or equal to 1/2. In this case, a side of the magnetic steel 120 close to the limiting ring 130 is coated, and the other side of the magnetic steel 120 close to the base plate 111 is exposed. In this way, not only the connection effect on the magnetic steel 120 is ensured but also the magnetic steel 120 can be cooled. It can be seen that the film 200 partially coats the magnetic steel 120, to allow the magnetic steel to be exposed out of the film 200 for heat dissipation.

Further, a ratio of a distance between the inner edge 210 of the film 200 and the outer periphery of the magnetic steel 120 to the radial size of the magnetic steel 120 is greater than or equal to 1/2.

In addition, a distance between the inner and outer end faces of the limiting ring 130 (i.e. the radial size of the limiting ring 130) is less than or equal to 2 times the distance between the outer edge 220 of the limiting ring 130 and the outer periphery of the magnetic steel 120, preferably 1.5 times.

### Third Embodiment

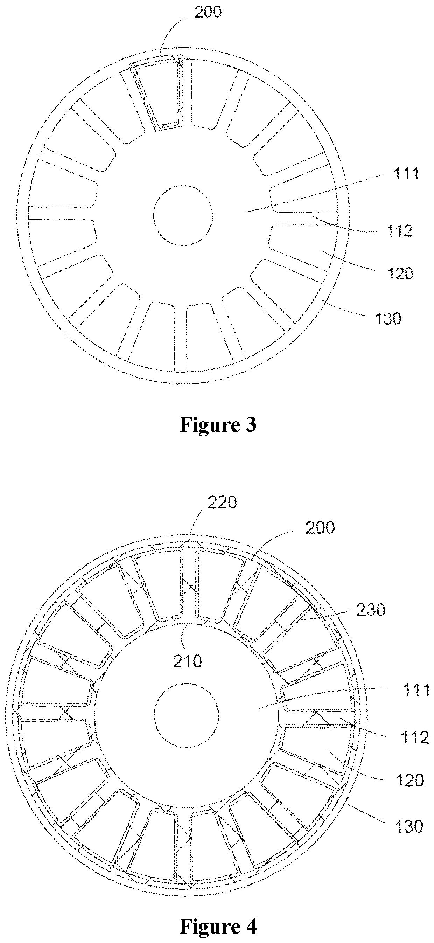

As shown in Figure 3, the film 200 matches the shape of an outer contour of the magnetic steel 120, and the connection positions between the magnetic steel 120 and the base plate 111, the support plate 112, and the limiting ring 130 are coated by the film 200.

The film 200 is hollowed out in the middle, to expose a middle portion of the magnetic steel 120 for heat dissipation, and only the connection positions between the magnetic steel 120 and the base plate 111, the support plate 112, and the limiting ring 130 are coated by the film 200.

The number of the films 200 is the same as the number of the magnetic steels 120, the films 200 are arranged at positions of the corresponding magnetic steels 120 one by one, and a single thermoforming is performed by using a manufacturing apparatus.

In addition, the film 200 does not exceed the limiting ring 130, so as to avoid failing of the film 200.

### Fourth Embodiment

As shown in Figure 4, the present embodiment differs from the first embodiment in that the film 200 has multiple heat dissipation holes 230. The heat dissipation holes 230 are provided in positions corresponding to the magnetic steels 120, and a cross section of the heat dissipation hole 230 is smaller than a cross section of the magnetic steel 120. In this way, the connection effect on the magnetic steel 120 is ensured, and the magnetic steel 120 can also dissipate heat.

The number of heat dissipation holes 230 and the number of magnetic steels 120 may be the same. The heat dissipation hole 230 may be fan-shaped, or may be in other shapes, such as rectangular, circular, or triangular.

In summary, the film 200 may be of various shapes and may be connected to the magnetic steels 120, the limiting ring 130, and the rotor disc 110, so that the magnetic steel 120 is partially exposed or unexposed. In the partially exposing case, the magnetic steel 120 dissipates heat through an exposed portion thereof. In addition, the outer edge 220 of the film 200 is located between the inner and outer end faces of the limiting ring 130, which prevents the outer edge 220 of the film 200 from exceeding the limiting ring 130 and thereby preventing the adhesion of the film 200 on the rotor body 100 from being affected.

As shown in Figure 5, the number of the films 200 is at least two, and the at least two films 200 are kept on both sides of the rotor body 100 in the axial direction. With the films 200 being arranged on both sides of the rotor body 100 in the axial direction, the fixation effect of the magnetic steel 120 in the axial direction is greatly improved.

More preferably, each side of the rotor body 100 in the axial direction is provided with two films 200.

It should be noted that the shapes of the films 200 on both sides of the rotor body 100 in the axial direction are different. For example, one film 200 according to the first embodiment is applied to one side of the rotor body 100 in the axial direction, and another film 200 according to any one of the second to fourth embodiments is applied to the other side of the rotor body 100 in the axial direction, so that one side of the magnetic steel 120 is fully coated by the one film 200 and the other side of the magnetic steel 120 is partially exposed out of the another film 200, which not only improves the connection effect of the film 200 on the magnetic steel, but also improves the heat dissipation performance.

A surface of the film 200 and/or a surface of the rotor disc 110 are provided with joint portions. The joint portions slightly protrude from the surface of the film 200 and the surface of the rotor disc 110 to increase friction between the two, which not only prevents the two from being unable to be center aligned and a subsequent hot pressing operation from being affected, but also improves the bonding performance of the two.

In an embodiment, the joint portion of the film 200 is in a shape of grids, the joint portion of the rotor disc 110 is in a shape of straight lines, and the multiple straight lines are arranged at intervals.

In another embodiment, the joint portion of the film 200 is in a shape of straight lines, and the joint portion of the rotor disc 110 is in a shape of grids.

The rotor disc 110 includes multiple layers of substrates, and the multiple layers of substrates are laminated and hot-pressed to form the rotor disc. The substrates may be made of composite materials, and are hot-melted and fixed under hot pressing. The rotor disc 110 is of a solid structure rather than a hollow structure, which not only improves the structural strength of the rotor disc 110, but also enables effective bonding between the film 200 and the rotor disc 110 under hot pressing, which further improves the combination effect of the two.

In summary, with at least one side of the rotor body 100 in the axial direction being coated with the film and the film 200 being kept on the magnetic steels 120 and the limiting ring 130, the connection between the magnetic steels 120 and the limiting ring 130 is more stable to block the axial movement of the magnetic steels 120, and improve the flatness of the surface of the rotor body 100 as well, prevent the limiting ring 130 from failing due to the high-speed rotation of the rotor body 100, which further avoids the shaking or even detachment of the magnetic steel 120, and thereby effectively prolonging the service life and the work efficiency of the rotor body 100. The film 200 may be of various shapes and may be connected to the magnetic steels 120, the limiting ring 130, and the rotor disc 110 to allow the magnetic steels 120 to be partially exposed or unexposed. In the partially exposing case, the magnetic steel 120 dissipates heat through the exposed part thereof. The outer edge 220 of the film 200 is located between the inner and outer end faces of the limiting ring 130, to prevent the outer edge 220 of the film 200 from exceeding the limiting ring 130 which in turn may affect the adhesion of the film 200 on the rotor body 100. In addition, the rotor disc 110 is formed by laminating multiple layers of substrates, and the surface of the film 200 and/or the surface of the rotor disc 110 have the joint portions, which improves the combination effect of the film 200 and the rotor disc 110.

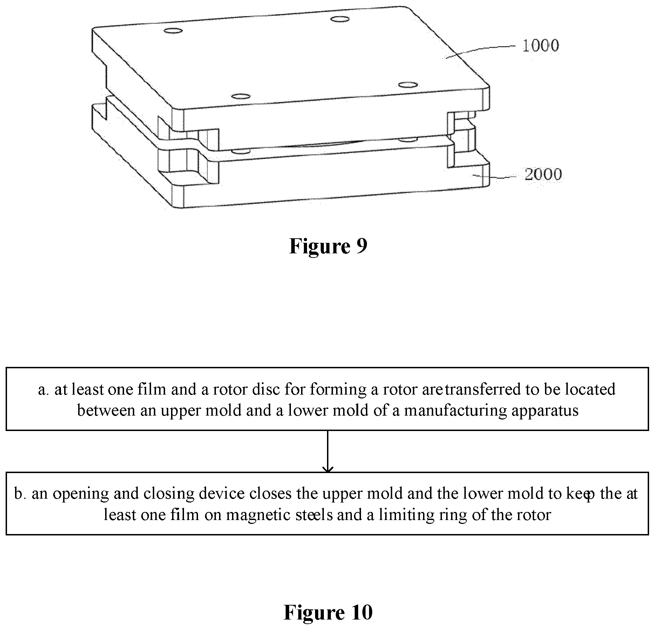

As shown in Figures 8 and 9, a manufacturing apparatus is configured for coating a film on a surface of a rotor body. The manufacturing apparatus includes an upper mold 1000, a lower mold 2000, an opening and closing device, and a temperature control device. The opening and closing device is configured to control opening and closing of the upper mold 1000 and the lower mold 2000, and the temperature control device is configured to provide a temperature for hot melting fixation of the film 200. When at least one film 200 and the rotor body 100 are placed between the upper mold 1000 and the lower mold 2000, and the upper mold 1000 and the lower mold 2000 are closed, the film 200 is kept on the magnetic steels 120 and the limiting ring 130 of the rotor body 100 to form a rotor.

The at least one film 200 and the rotor body 100 are placed between the upper mold 1000 and the lower mold 2000, and the film 200 is placed at a corresponding position of the rotor body 100, so that the film 200 can be kept on the magnetic steels 120 and the limiting ring 130 later. Then the opening and closing device controls the upper mold 1000 and the lower mold 2000 to be closed, to make the film 200 be kept on the magnetic steels 120 and the limiting ring 130, and thus the rotor is formed.

As shown in Figure 8, the lower mold 2000 is kept fixed, the opening and closing device is mechanically connected to the upper mold 1000, to drive the upper mold 1000 to move up and down, so as to realize the opening and closing of the upper mold 1000 and the lower mold 2000. The opening and closing device may include a motor, a lead screw, an air cylinder, or a sliding rod, etc. Taking the solution that the motor and the lead screw are included as an example, the lead screw and the motor are kept in an opening and closing direction of the upper mold 1000 and the lower mold 2000, i.e. an axial direction of the upper mold 1000 and the lower mold 2000. The upper mold 1000 is screwed to the lead screw, and the lead screw is mechanically connected to the motor. The motor drives the lead screw to rotate, so as to drive the upper mold 1000 to move along the axial direction of the lead screw, to realize the opening and closing of the upper mold 1000 and the lower mold 2000.

Continuing to refer to Figure 8, the manufacturing apparatus further includes a guide device 3000. The guide device 3000 is arranged between the upper mold 1000 and the lower mold 2000 to automatically align the upper mold 1000 and the lower mold 2000 during an opening and closing process, so as to prevent misalignment between the upper mold 1000 and the lower mold 2000 during the opening and closing process which in turn affects the retention effect of the film 200 on the rotor body 100. For example, the misalignment of the film 200 with respect to the rotor body 100 may occur, which weakens the axial fixation ability of the film 200 on the rotor body 100.

Specifically, the guide device 3000 includes at least one guide rod 3100, the at least one guide rod 3100 is mounted at the lower mold 2000. The upper mold 1000 has a guide hole 1100 for the guide rod 3100 to be inserted in. The guide rod 3100 is kept in the opening and closing direction of the upper mold 1000 and the lower mold 2000. The centering of the opening and closing is realized by the guide device 3000 through the cooperation of the guide rod 3100 and the guide hole 1100.

The number of guide rods 3100 may be four, and the guide rods 3100 are arranged at equal intervals along the axial direction of the rotor body 100. With the increased number of guide rods 3100, the centering ability is improved, and the opening and closing between the upper mold 1000 and the lower mold 2000 are more stable.

Preferably, the rotor body 100 is kept between the four guide rods 3100, and thus a placement position of the rotor body 100 with respect to the upper mold 1000 is determined, that is, the guide rod 3100 defines the position of the rotor body 100 with respect to the upper mold 1000, so that the connection between the film 200 and the rotor body 100 can be successfully completed later.

The manufacturing apparatus further includes at least one loading device for transferring the rotor body 100 and the film 200 to be located between the upper mold 1000 and the lower mold 2000. Specifically, the number of loading device is two, the rotor body 100 is transferred onto the lower mold 2000 by one of the loading devices, and the film 200 is transferred onto the rotor body 100 by the other of the loading devices. The film 200 can be located at a position on the rotor body 100 where it is required to be kept for the subsequent opening and closing of the upper mold 1000 and the lower mold 2000.

The loading device may be a conveyor belt or the like, and the rotor body 100 is pushed to a designated position of the lower mold 2000 by a sensor, a push rod, or the like. The film 200 may also be placed on the rotor body 100 by using a sensor or the like. In addition, the loading device of the film 200 may be correspondingly provided with a cutting device, that is, a film raw material is conveyed on the loading device and is cut by the cutting device to obtain the film 200.

Similarly, the manufacturing apparatus further includes an unloading device, and the molded rotor is pushed to the unloading device by a push rod or the like for unloading. The unloading device may be a conveyor belt or the like.

The molding of the rotor is more automated with the loading device and the unloading device, effectively improving the efficiency. Alternatively, the loading of the film 200 and the rotor body 100 may be completed manually.

Further, the number of the films 200 is at least two, the at least two films 200 are kept on both sides of the rotor body 100 in the axial direction respectively. The manufacturing apparatus may be used in various manners of manufacture as follows.

In a first manner, the rotor body 100 is placed between two films 200, and the rotor body 100 and the two films 200 are placed on the lower mold 2000 together, and then the above three are fixed through the opening and closing of the upper mold 1000 and the lower mold 2000. In this case, the temperature control device is connected to both the upper mold 1000 and the lower mold 2000, so that both the upper mold 1000 and the lower mold 2000 are heated by the temperature control device, and thus the films 200 in contact with the upper mold 1000 and the lower mold 2000 are fixed to the rotor body 100 by hot melting.

In a second manner, the rotor body 100 is placed on the lower mold 2000 first, a film 200 is placed on the rotor body 100, and then the rotor body 100 and the film 200 are fixed to each other through the opening and closing of the upper mold 1000 and the lower mold 2000. Then, the rotor body 100 is manually turned over, and another film 200 is placed on the other side of the rotor body 100 and is fixed, so as to obtain a rotor with the films on both sides of the rotor body 100 in the axial direction. In this case, the temperature control device is connected to the upper mold 1000, so that the upper mold 1000 is heated by the temperature control device, and thus the film 200 in contact with the upper mold 1000 is fixed to the rotor body 100 by hot melting.

A third manner differs from the second manner in that the manufacturing apparatus further includes a turning device. The turning device is arranged on one side of the lower mold 2000 to clamp the rotor body 100 and turn over the rotor body 100 by 180 degrees. That is, the turning device is used to replace the manual manner, which effectively improves the manufacturing efficiency. The turning device may be a machine hand or the like.

The film 200 may be a PP film, which can release adhesiveness after being heated. The film 200 can be cooled and solidified on the rotor body 100 by utilizing the adhesiveness. It can be seen that the temperature control device heats the upper mold 1000 or the lower mold 2000, so that the film 200 in contact with the upper mold 1000 or the lower mold 2000 can be fixed to the rotor body 100 by hot melting.

Preferably, the upper mold 1000 or the lower mold 2000 may be made of an anti-adhesive material, such as aluminum or the like, to prevent the film 200 from attaching to the upper mold 1000 or the lower mold 2000 and in turn affecting the molding and unloading of the rotor. In addition, only one side of the film 200 can release adhesiveness, the one side is fixed to the rotor body 100, and the other side of the film 200 corresponds to the upper mold 1000 or the lower mold 2000, so as to prevent the film 200 from attaching to the upper mold 1000 or the lower mold 2000.

Glue may be applied between the film 200 and the rotor body 100, and the glue is additionally provided for fixation between the film 200 and the rotor body 100.

The film 200 is kept on the magnetic steels 120, the limiting ring 130, and the rotor disc 110 of the rotor body 100, to improve the axial fixation effect of the film 200 on the magnetic steel 120.

In addition, in order to improve the flatness of the film 200 on the rotor body 100, a scraper is moved on the film 200 on the rotor body 100 to prevent bubbles from being formed between the film 200 and the rotor body 100 and affecting the flatness and adhesion of the film 200 and the rotor body 100, thereby avoiding the detachment of the film 200. The scraper may be driven by an air cylinder and kept on one side of the lower mold 2000. After the film 200 is hot melted by the upper mold 1000 and fixed to the rotor body 100, the cylinder drives the scraper to move on the film 200, to improve the flatness of the film 200 and the rotor body 100.

In summary, the film 200 can be fixed at the designated position of the rotor body 100 only by opening and closing of the upper mold 1000 and the lower mold 2000, and by utilizing the adhesiveness of the film 200, that is, the film 200 is kept on the magnetic steels 120, the limiting ring 130, and the rotor disc 110 of the rotor body 100. The structure is simple, and manufacturing and molding are convenient. In addition, the automation level can be further improved with the loading and unloading devices, the turning device, etc., which further improves the manufacturing efficiency.

As shown in Figure 10, the manufacturing method includes the following steps (a) to (b):
in step (a), at least one film and a rotor body for forming a rotor are transferred to be located between an upper mold and a lower mold of a manufacturing apparatus; and
in step (b), an opening and closing device closes the upper mold and the lower mold to keep the at least one film on magnetic steels and a limiting ring of the rotor body.

The step (a) includes the step of heating the at least one film, and the upper mold or the lower mold by a temperature control device. The main purpose of heating the upper mold and the lower mold by the temperature control device is to make the film be fixed to the rotor body by hot melting. The temperature control device controls the temperature of the upper mold and the lower mold to be in a range of 60 degrees Celsius to 100 degrees Celsius, preferably 80 degrees Celsius. Then the temperature control device releases the temperature control of the upper mold and the lower mold, that is, the temperature gradually decreases, so that when the upper mold and the lower mold press the film and the rotor body, the film is hot-melted and then can be cooled and fixed to the rotor body as the temperature decreases.

The step (a) further includes the following step: the number of the films is two, and the two films are placed on both sides of the rotor body in the axial direction.

The step (a) further includes the following step: the film and the rotor body are transferred to be located between the upper mold and the lower mold by the loading device.

The step (a) further includes the following step: the molded rotor is transferred by the unloading device.

The step (b) further includes the following step: the film is kept on the magnetic steels, the limiting ring, and the rotor disc of the rotor body.

The step (b) further includes the following step: after the film is coated on one side of the rotor body, the opening and closing device separates the upper mold and the lower mold; and the rotor body is clamped and turned over by 180 degrees by a turning device to coat another film on the other side of the rotor body.

It should be noted that the closing time that the upper mold and the lower mold being closed is determined by the time required by hot melting and cooling of the film. During the closing time, the film can be hot-melt, cooled and fixed to the rotor body.

In summary, the film and the rotor body are formed by pressing through opening and closing the upper mold and the lower mold, and the film is fixed to the rotor body through hot melting by utilizing the adhesiveness of the film. The molding is convenient and efficient, and the molding efficiency of the rotor is greatly improved.

The above embodiments are only used to illustrate technical ideas and characteristics of the present application, and the purpose thereof is to enable those skilled in the art to understand the content of the present application and implement it accordingly. The scope of the present application is not limited only by the embodiments, that is, any equivalent changes or modifications made in accordance with the principle disclosed in the present application shall fall within the scope of the present application.

## Claims

1. A manufacturing apparatus for coating a film on a surface of a rotor body (100), comprising an upper mold (1000), a lower mold (2000), an opening and closing device, and a temperature control device, wherein
the opening and closing device is configured to control opening and closing of the upper mold (1000) and the lower mold (2000), the temperature control device is configured to provide a temperature for hot melting fixation of the film (200);
when the at least one film (200) and the rotor body (100) are placed between the upper mold (1000) and the lower mold (2000), and the upper mold (1000) and the lower mold (2000) are closed, the at least one film (200) is kept on magnetic steels (120) and a limiting ring (130) of the rotor body (100) to form a rotor.

2. The manufacturing apparatus according to claim 1, further comprising a guide device (3000), wherein the guide device (3000) is arranged between the upper mold (1000) and the lower mold (2000) to automatically align the upper mold (1000) and the lower mold (2000) during an opening and closing process.

3. The manufacturing apparatus according to claim 1, further comprising a turning device, wherein the turning device is arranged on one side of the lower mold (2000) for clamping the rotor body (100) and turning over the rotor body (100) by 180 degrees.

4. A manufacturing method, comprising steps of:
(a) transferring at least one film and a rotor body for forming a rotor, to make the at least one film and the rotor body be located between an upper mold and a lower mold of a manufacturing apparatus; and
(b) closing the upper mold and the lower mold by an opening and closing device, to keep the at least one film on magnetic steels and a limiting ring of the rotor body.

5. The manufacturing method according to claim 4, wherein the step (a) comprises a step of heating the at least one film, and the upper mold or the lower mold by a temperature control device.

6. The manufacturing method according to claim 4, wherein the step (b) further comprises steps of
separating the upper mold and the lower mold by the opening and closing device after the at least one film is coated on one side of the rotor body; and
clamping the rotor body by a turning device and turning over the rotor body by 180 degrees, to coat another film on the other side of the rotor body.

7. A rotor, comprising:
a rotor body (100), wherein the rotor body (100) comprises a rotor disc (110), a plurality of magnetic steels (120), and a limiting ring (130); the rotor disc (110) comprises a base plate (111) and a plurality of support plates (112), the plurality of support plates (112) are extended outward from a periphery of the base plate (111), the plurality of magnetic steels (120) are fixed to and extended outward from the base plate (111), the plurality of magnetic steels (120) and the plurality of support plates (112) are arranged in an alternating arrangement, and the limiting ring (130) is sleeved on an outer periphery of the plurality of magnetic steels (120) to fix the plurality of magnetic steels (120) between the base plate (111) and the limiting ring (112); and
at least one film (200), wherein the at least one film (200) is kept on the plurality of magnetic steels (120) and the limiting ring (130).

8. The rotor according to claim 7, wherein the at least one film (200) is kept on the plurality of magnetic steels (120), the limiting ring (130), and the rotor disc (110) of the rotor body (100).

9. The rotor according to claim 7, wherein the number of the at least one film (200) is at least two, and the at least two films (200) are kept on both sides of the rotor body (100) in an axial direction.

10. The rotor according to claim 9, wherein one side of the plurality of magnetic steels (120) is coated by one of the at least two films (200), and the other side of the plurality of magnetic steels (120) is partially exposed out of another one of the at least two films (200).
